# EUROPEAN PATENT SPECIFICATION

(11) **EP 4 605 289 B1**
(45) Date of publication and mention of the grant of the patent: **02.12.2026**
(21) Application number: 23793354.4
(22) Date of filing: 19.10.2023
(51) Int. Cl.: B62B 9/24

(54) **ARMREST AND CHILD CARRIER**
ARMLEHNE UND KINDERTRAGE
ACCOUDOIR ET PORTE-BÉBÉ

(30) Priority: 19.10.2022 CN 202211281093
(43) Date of publication of application: 27.08.2025
(73) Proprietor: Wonderland Switzerland AG, 6312 Steinhausen (CH)
(72) Inventor: GUO, Zhengwen, Dongguan, Guangdong 523648 (CN); SUN, Mingxing, Dongguan, Guangdong 523648 (CN); CHIANG, ChiaJen, Dongguan, Guangdong 523648 (CN); WANG, ErXue, Dongguan, Guangdong 523648 (CN)
(74) Representative: Lucke, Andreas
(86) International application number: PCT/EP2023/079156
(87) International publication number: WO 2024/083987

(56) References cited:
- WO-A1-2022/033108
- CN-U- 202 754 004
- CN-Y- 2 759 886

## Description

### TECHNICAL FIELD

The present invention relates to an armrest and a child carrier.

### BACKGROUND

Considering children's seating safety, child carriers such as strollers, child high chairs (or called child dining chairs) are usually equipped with armrests. The armrest extends laterally above a seat, allowing a child to lean forward, while preventing the child from falling forward. In order to improve the comfort of the armrest, the armrest usually includes an armrest body and a covering member. The armrest body is generally made of a tubular product, and the covering member made of leather is arranged around the armrest body. The current manner in which the covering member covers the armrest body is as follows.

First, the covering member is sewn to have a tubular shape, a glue layer is pre-coated on an inner surface of the tubular covering member, and glue is pre-coated on an outer surface of the armrest body. Then, the tubular covering member is fitted on the armrest body, and after the glue solidifies, the covering member is firmly adhered onto the armrest body. Since the tubular covering member needs to be fitted on the armrest body, the armrest body generally needs to be made of a tubular product with a uniform diameter, which may not meet the customers' demands for diversified shapes of the armrests. In addition, in order to ensure the flatness of the tubular covering member, a hole diameter of the tubular covering member is usually smaller than a diameter of the armrest body, which results in a time-consuming and laborious process of fitting the tubular covering member on the armrest body. In addition, due to uneven glue or uneven force during the fitting process, the tubular covering member is prone to wrinkling, which affects the appearance and feel of the armrest.

CN202754004U discloses a quick-disassembled device of a front armrest of a baby stroller, including a stroller frame and a front armrest assembly. Two sides of the front armrest assembly are respectively provided with a socket. An end portion of each socket is provided with an insertion block protruding from thereon, and connected with a C-shaped locking element. A lower portion of each C-shaped locking element extends out of the socket, and a pressure spring is arranged between the lower portion of the C-shaped locking element and the socket. The upper end of the C-shaped locking element is provided with an engaging hook. The left side and the right side of the stroller frame are respectively provided with a connecting element, each connecting element having an insertion groove and a slot which are respectively used for the insertion block and the engaging hook to be inserted. A boss is arranged in each slot for engaging with the engaging hook. When the sockets on two sides of the front armrest assembly are fixedly connected to the connecting elements on two sides of the stroller frame, the insertion block and the engaging hook are respectively inserted into the insertion groove and the slot, and the engaging hook hooks the boss to achieve locking between the front armrest assembly and the stroller frame.

CN2759886Y discloses a quick-disassembled device of a front armrest of a baby stroller, which is used for conveniently and quickly disconnecting the front armrest of the baby stroller, including two engaging ends, two engaging pivot seats, and two pivot parts. The two engaging ends are respectively arranged on both ends of the front armrest, and are respectively provided with engaging plates having U-shaped engaging openings. Each engaging pivot seat is arranged on an end of an armrest engaged with the front armrest. Each of the engaging pivot seats is provided with an engaging convex block. The engaging convex block is provided with an engaging groove. The engaging groove can be engaged with the corresponding U-shaped engaging opening on the engaging plates. The engaging convex block is additionally provided with a pivot hole. The two pivot parts are respectively arranged on the inner surfaces of the engaging ends on the front armrest. Each of the pivot parts includes an elastic component abutting against a pivot component. The pivot component is provided with a pivot bolt. The pivot bolts can be connected to the pivot hole by the elastic force of the elastic components. The pivot component is additionally provided with a switching key which is used for controlling the actions of the pivot bolt and the elastic component.

WO2022033108A1 discloses a handrail assembly, comprising a handrail body, the handrail body is covered with a first protective layer of a flexible structure, the first protective layer is covered with a second protective layer, the second protective layer shields the first protective layer to prevent the first protective layer from being exposed to the outside. The support frame structure comprises a front support assembly, a rear support assembly, a push rod assembly, a connecting assembly and a handrail assembly, a connecting portion of the handrail assembly being detachably connected to the connecting assembly. The handrail assembly can prevent the first protective layer from being exposed to the outside, and prevent children from accidentally swallowing the filling of the first protective layer, thereby guaranteeing the life safety of children. The child carrier having the support frame structure can achieve convenient and quick assembly and disassembly of the handrail assembly, reduce storage space, and facilitate the sitting and getting up of children.

### SUMMARY

The present invention is to provide an armrest that allows an armrest body to be equipped with a covering member while having diversified shapes.

In an aspect, the present invention provides an armrest, including a first armrest cover, a second armrest cover, and a first covering member. The first armrest cover and the second armrest cover are mounted to each other, and at least a part of an outer surface of the first armrest cover is covered by the first covering member.

In an embodiment, the first covering member includes a first flange. The first flange is clamped between the first armrest cover and the second armrest cover.

In an embodiment, the first armrest cover is provided with a first cavity including two opposing sidewalls. The first covering member includes two first flanges. The two first flanges extend into the first cavity respectively and correspond to the two sidewalls one by one. The second armrest cover includes two opposing pressing portions, and the two pressing portions are inserted into the first cavity and correspond to the two first flanges one by one. A first portion of each of the two first flanges is clamped between the corresponding sidewall and the corresponding pressing portion.

In an embodiment, a second portion of each of the two first flanges is clamped between a bottom wall of the first cavity and the corresponding pressing portion.

In an embodiment, the second armrest cover includes a base portion positioned between the two pressing portions. The two pressing portions cooperate with the base portion to define a second cavity. An opening of the second cavity faces a bottom wall of the first cavity.

In an embodiment, the first armrest cover is engaged with the second armrest cover.

In an embodiment, at least one elastic arm is disposed on one of a bottom wall of the first cavity and an inner wall of the second armrest cover, and at least one engaging portion is disposed on the other of the bottom wall of the first cavity and the inner wall of the second armrest cover. The elastic arm and the engaging portion are adapted to be engaged with each other.

In an embodiment, the engaging portion includes a connecting body and an engaging plate. An end of the connecting body is connected to one of the bottom wall of the first cavity and the inner wall of the second armrest cover, and the engaging plate is positioned on another end of the connecting body. The elastic arm includes an arm body and a finger. An end of the arm body is connected to the other of the bottom wall of the first cavity and the inner wall of the second armrest cover. The finger is positioned on another end of the arm body. The engaging plate and the finger are adapted to be engaged with each other.

In an embodiment, a lateral movement of the finger is limited by the connecting body; and/or each of the at least one engaging portion corresponds to a pair of elastic arms, and the pair of elastic arms clamps the corresponding engaging portion.

In an embodiment, both ends of the first cavity are respectively provided with a first end wall, and both ends of the second armrest cover are respectively provided with a second end wall. One of the adjacent first end wall and second end wall is provided with a protrusion, and the other of the adjacent first end wall and second end wall is provided with a hole. The protrusion is engaged into the hole.

In an embodiment, the first covering member is adhered to the first armrest cover; or a cushioning layer is disposed between the first covering member and the first armrest cover.

In an embodiment, the first armrest cover is riveted or welded to the second armrest cover, or connected to the second armrest cover by a pull rivet, or the first armrest cover is detachably connected to the second armrest cover.

In an embodiment, the first covering member is leather, fabric or a decorative film.

In another aspect, the present application provides a child carrier including the armrest as described above.

In an embodiment, the child carrier further includes side armrest supports on both sides. Two ends of the armrest are detachably connected to the side armrest supports on both sides.

In the armrest according to the embodiments of the present invention, the armrest body is divided into two separate parts, the first armrest cover and the second armrest cover. The first covering member covers the first armrest cover instead of being fitted on the outside of the entire armrest body. Thus, a shape of the armrest body is not limited to a tubular shape with a uniform cross section, and the first armrest cover and the second armrest cover can be designed to have any suitable shape according to ergonomics or other needs, so as to meet the customers' demands on diversified shapes of the armrests. The operation of attaching the first covering member to the first armrest cover saves time and effort. In addition, during the attaching process, a shape of the first covering member can be adjusted conveniently, which can effectively avoid undesired wrinkles of the first covering member.

### BRIEF DESCRIPTION OF THE DRAWINGS

The accompanying drawings constituting a part of this application are used to provide further understanding of the present invention, and the schematic embodiments and descriptions of the present application are used to illustrate the present invention, and do not constitute an improper limitation of the present invention which is defined solely by the appended claims.
FIG. 1 is a perspective view schematically showing a child carrier according to an embodiment of the present invention, with the child carrier adopting an armrest according to an embodiment of the present invention.
FIG. 2 is a top perspective view schematically showing an armrest mounted on side armrest supports of a child carrier according to an embodiment of the present invention.
FIG. 3 schematically shows a cross-sectional view taken along a line A-A in FIG. 2, and shows a first armrest cover, a second armrest cover, and a first covering member according to an example.
FIG. 4 schematically shows a cross-sectional perspective view taken along the line A-A in FIG. 2, and shows a first armrest cover, a second armrest cover, and a first covering member according to another example.
FIG. 5 schematically shows a cross-sectional perspective view taken along the line A -A in FIG. 2, and shows a first armrest cover, a second armrest cover, and a first covering member according to yet another example.
FIG. 6 is a top perspective view schematically showing an armrest according to an embodiment of the present application, with the first covering member being omitted for ease of illustration.
FIG. 7 is a bottom perspective view schematically showing an armrest according to an embodiment of the present invention, with the first covering member being omitted for ease of illustration.
FIG. 8 is an exploded top view schematically showing the armrest according to an embodiment of the present invention, with the first covering member being omitted for ease of illustration.
FIG. 9 is an exploded bottom view schematically showing an armrest according to an embodiment of the present invention, with the first covering member being omitted for ease of illustration.
FIG. 10 is a bottom perspective view schematically showing an armrest according to another embodiment of the present invention, with the first covering member being omitted for ease of illustration.
FIG. 11 is an exploded top view schematically showing an armrest according to another embodiment of the present invention, with the first covering member being omitted for ease of illustration.
FIG. 12 is an exploded bottom view schematically showing an armrest according to another embodiment of the present invention, with the first covering member being omitted for ease of illustration.

### DETAILED DESCRIPTION OF THE EMBODIMENTS

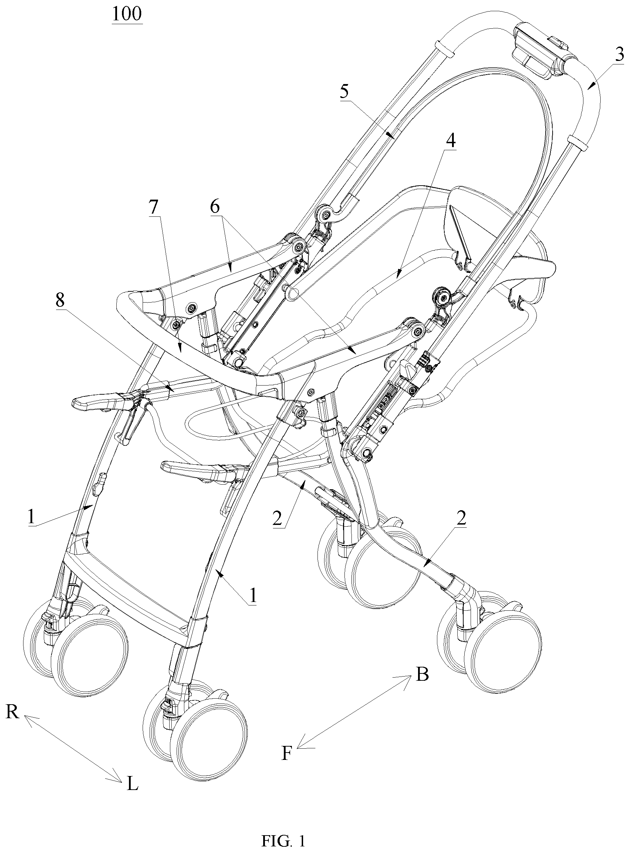

FIG. 1 is a perspective view schematically showing a child carrier 100 according to an embodiment of the present invention, with the child carrier 100 adopting an armrest 7 according to an embodiment of the present application. In the embodiment shown in FIG. 1, the child carrier 100 is exemplarily described by taking a stroller as an example, and the armrest 7 extends laterally above a seat. It can be understood that the type of the child carrier 100 is not limited to a stroller, which can be, for example, a child dining chair, a child tricycle or other carrier products for the child to sit on. The armrest 7 is not limited to the type shown in FIG. 1, and in some embodiments, the armrest 7 can be, for example, a push handle armrest of a child carrier such as a stroller. In addition, the armrest 7 according to the embodiment of the present invention is not limited to be applied to the child carrier 100, and can be applied to any suitable product.

Continuing to refer to FIG. 1, a main frame of the child carrier 100 is generally symmetrical in a left-right direction, including components such as a front foot frame 1, a rear foot frame 2, a push handle 3, a backrest frame 4, a roof frame 5, a side armrest support 6, an armrest 7, and a seat support 8. The connection relationship between these components can refer to related technologies, and will not be repeated herein. In some embodiments, the main frame of the child carrier 100 can be folded so that the child carrier 100 has a smaller volume when not in use. In some alternative embodiments, the main frame of the child carrier 100 may not be foldable.

Continuing to refer to FIG. 1, the seat support 8 is used, for example, to support a seat board (not shown in the figure). The seat board may be covered by a seat cloth to provide a more comfortable seating experience for the child. The armrest 7 is positioned above the seat support 8 and extends laterally (i.e., extends in the left-right direction in FIG. 1). When the child is seated in the stroller, the armrest 7 is positioned in front of the child. Two ends 71a of the armrest 7 are bent backward, and can be connected to the side armrest supports 6 on both sides through any suitable connecting structure. In some embodiments, the two ends 71a of the armrest 7 can be detachably connected to the side armrest supports 6 on both sides, so that the armrest 7 can be detached from the side armrest supports 6 when needed, thereby reducing the difficulty of taking the child out of a seating position.

It should be noted that, unless otherwise clearly specified and defined, orientation terms such as "front", "rear", "left", and "right" in the embodiments of the present application base on "front", "rear", "left", and "right" orientations of the child seating in the child carrier, and in the figures, arrows F and B are used to schematically show the directions of "front" and "back", and arrows L and R are used to schematically show the directions of "left" and 'right". These orientation terms are only used to make the description of the embodiments of the present application clearer, and are not used to improperly limit the protection scope of the present application.

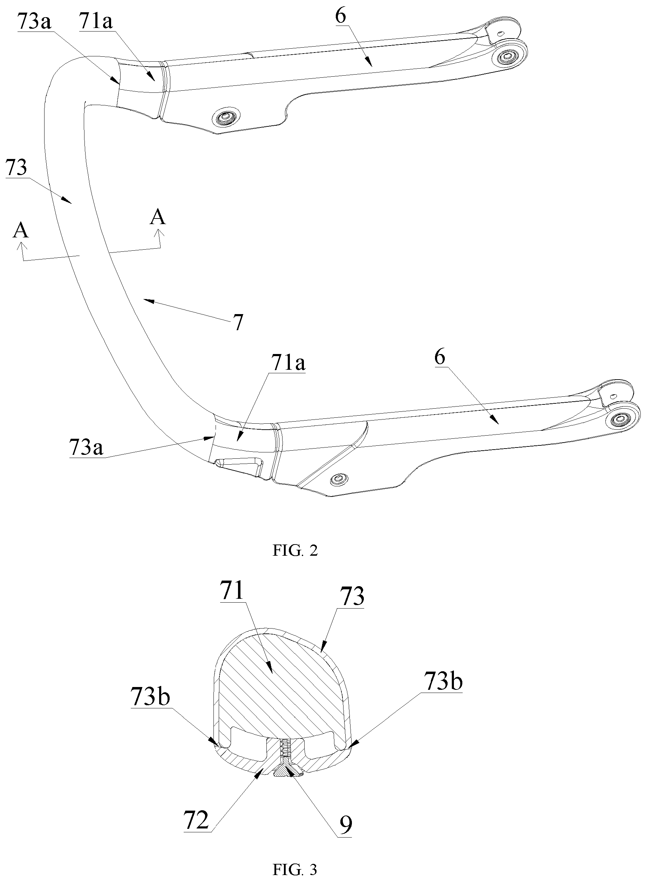

Referring to FIGS. 2 and 3, the armrest 7 according to the embodiment of the present application includes an armrest body and a first covering member 73. The armrest body includes a first armrest cover 71 and a second armrest cover 72. The first armrest cover 71 and the second armrest cover 72 can be assembled together in any suitable manner. In some embodiments, the first armrest cover 71 and the second armrest cover 72 are arranged in an up-down direction, and the second armrest cover 72 is mounted at the bottom of the first armrest cover 71. In some embodiments, two ends of the first armrest cover 71 may be used as, for example, two ends 71a of the armrest 7. The two ends of the first armrest cover 71 are detachably connected to the side armrest supports 6 on both sides. In some alternative embodiments, the first armrest cover 71 and the second armrest cover 72 are arranged, for example, in a front-rear direction. The second armrest cover 72 is mounted, for example, on the front side of the first armrest cover 71. When a child is seated in the child carrier 100, the first armrest cover 71 is more likely to receive external force than the second armrest cover 72, and for example, the external force may be result from the child's grasping, leaning against or collision, etc. The first covering member 73 covers an outer surface of the first armrest cover 71. The first covering member 73 can be made of leather (including natural leather and artificial leather, the artificial leather, for example, including but not limited to ethylvinylacetate, referred to as EVA), fabric (or called cloth) or other soft materials (such as decorative film). The first covering member 73 provides a more comfortable feel for the armrest 7, and plays a role in shock absorption.

In the armrest 7 according to the embodiments of the present application, the armrest body is divided into two separate parts, the first armrest cover 71 and the second armrest cover 72. The first covering member 73 covers the first armrest cover 71 instead of being fitted on the outside of the entire armrest body. Thus, a shape of the armrest body is not limited to a tubular shape with a uniform cross section, and the first armrest cover 73 and the second armrest cover 72 can be designed to have any suitable shape according to ergonomics or other needs, so as to meet the customers' demands on diversified shapes of the armrests 7. Compared with the solution of fitting the tubular covering member on the armrest 7 in the related art, in the embodiment of the present application, the operation of attaching the first covering member 73 to the first armrest cover 71 saves time and effort. In addition, during the attaching process, a shape of the first covering member 73 can be adjusted conveniently, which can effectively avoid undesired wrinkles of the first covering member 73.

Referring to FIGS. 2 and 3, in some embodiments, the first covering member 73 can be cut into a shape matching the outer surface of the first armrest cover 71 and then attached to the first armrest cover 71. An edge of the first covering member 73 includes two end edges 73a and two opposing side edges 73b between the two end edges 73a. In some embodiments, after covering the first armrest cover 71, the first covering member 73 is adhered to the first armrest cover 71, and the two end edges 73a of the first covering member 73 are close to both ends of the first armrest cover 71, and the two side edges 73b of the first covering member 73 are opposed to the second armrest cover 72 mounted to the bottom of the first armrest cover 71. The second armrest cover 72 covers edge lines of the two side edges 73b, so that, on the one hand, it can avoid easily turning outwards because the side edges 73b of the first covering member 73 are exposed, and on the other hand, it is beneficial to the aesthetic appearance of the armrest 7.

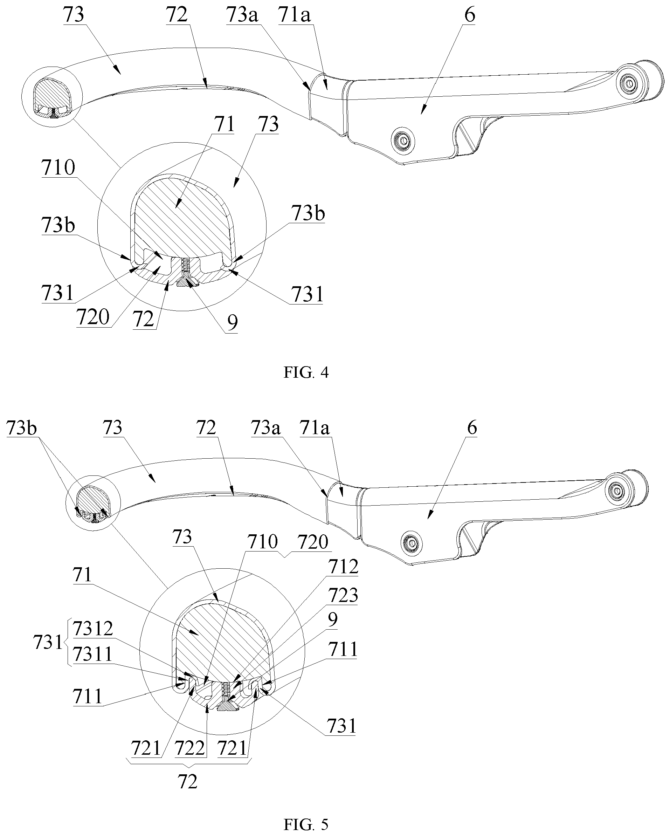

Referring to FIGS. 2 and 4, in some embodiments, the two side edges 73b of the first covering member 73 are respectively provided with a first flange 731. After the first covering member 73 covers the first armrest cover 71, for example, the first covering member 73 is adhered to the first armrest cover 71, two first flanges 731 are clamped between the bottom of the first armrest cover 71 and the second armrest cover 72. In this way, the first covering member 73 can be more firmly attached to the first armrest cover 71 and can be kept in tension, so as to prevent the first covering member 73 from loosening and wrinkling etc. due to weak glue after a long time of use. In some embodiments, the first armrest cover 71 may be provided with a first cavity 710 extending laterally, and/or the second armrest cover 72 may be provided with a second cavity 720 extending laterally. Edges of the first flanges 731 may be received in the first cavity 710 and /or the second cavity 720. In this way, it is possible to prevent the edges of the first flanges 731 from being compressed between surfaces of the first armrest cover 71 and the second armrest cover 72 that are in contact with each other, and to avoid bulging phenomenon of the first covering member 73 due to poor attaching.

Referring to FIGS. 2 and 5, in some embodiments, the first cavity 710 is arranged at the bottom of the first armrest cover 71. The first cavity 710 extends laterally, and the first cavity 710 includes two sidewalls 711 that are opposed to each other in the front-rear direction. After the first covering member 73 covers the first armrest cover 71, the side edges 73b of the first covering member 73 in the front-rear direction include the first flanges 731 respectively. The two first flanges 731 respectively extend over the bottom edge of the first armrest cover 71 and extend into the first cavity 710, and the two first flanges 731 correspond to the two sidewalls 711 one by one. The second armrest cover 72 includes two pressing portions 721 that are opposed to each other in the front-rear direction. The two pressing portions 721 are inserted into the first cavity 710 and correspond to the two first flanges 731 one by one. In some embodiments, a first portion 7311 of each of the first flanges 731 is clamped between the corresponding sidewall 711 and the corresponding pressing portion 721.

In the embodiment shown in FIG. 5, a gap is reserved between each of the pressing portions 721 and the corresponding sidewall 711 according to a thickness of the first covering member 73. The gap may have a thickness of 1.2 mm, for example, which is smaller than thicknesses of the first flanges 731 of the first covering member 73. In the process of inserting each of the pressing portions 721 of the second armrest cover 72 into the first cavity 710 and compressing each of the first flanges 731, the first portion 7311 of each of the first flanges 731 is moved inward along the sidewall 711, driven by the pressing portions 721, which is beneficial to the further tension of the first covering member 73 on the first armrest cover 71, effectively avoiding the bad appearance of the first covering member 73. In addition, most of the second armrest cover 72 can be received in the first cavity 710, which is also beneficial to the aesthetic appearance of the armrest 7.

Continuing to refer to FIG. 5, in some embodiments, a second portion 7312 of each of the first flanges 731 is clamped between a bottom wall 712 of the first cavity 710 and the corresponding pressing portion 721, so that each of the first flanges 731 is less likely to move with respect to the pressing portion 721 and the sidewall 711 of the first cavity 710, further ensuring the tension of the first covering member 73. In addition, as described above, the first cavity 710 of the first armrest cover 71 and/or the second cavity 720 of the second armrest cover 72 can receive the edges of the first flanges 731. In this way, it is possible to prevent the edges of the first flanges 731 from being compressed between the surfaces of the first armrest cover 71 and the second armrest cover 72 that are in contact with each other, and to avoid bulging phenomenon of the first covering member 73 due to poor attaching. It should be noted that, in some alternative embodiments, each of the first flanges 731 may not include the above-mentioned second portion 7312, but only include the above-mentioned first portion 7311.

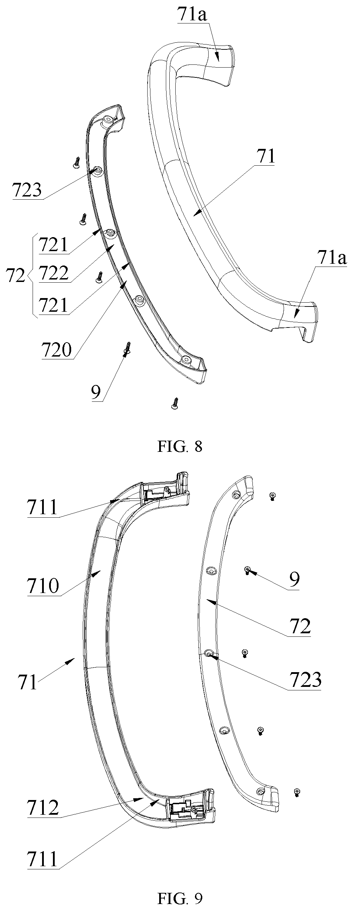

Referring to FIGS. 5 and 8, in some embodiments, the second armrest cover 72 includes a base portion 722 positioned between two pressing portions 721. The two pressing portions 721 are bent relative to the base portion 722. More specifically, the two pressing portions 721 extend upward from front and rear edges of the base portion 722 respectively. The two pressing portions 721 cooperate with the base portion 722 to define the second cavity 720 extending laterally. An opening of the second cavity 720 faces the bottom wall 712 of the first cavity 710. The second armrest cover 72 has a simple configuration, is easy to manufacture, and has low cost.

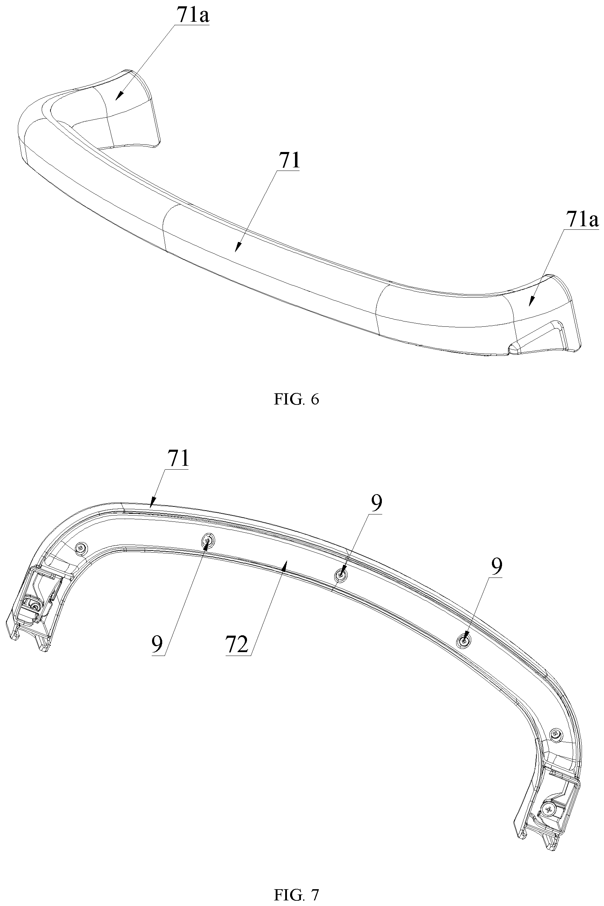

Referring to FIGS. 5 to 9, an exemplary mode for connection between the first armrest cover 71 and the second armrest cover 72 is shown. In some embodiments, a plurality of mounting bases 723 may be arranged laterally on the base portion 722 of the second armrest cover 72, and a plurality of fasteners 9 may be mounted in the plurality of mounting bases 723 respectively to connect the first armrest cover 71 and the second armrest cover 72 to each other. In some embodiments, the fastener 9 may be a pull nail or a rivet, so that the first armrest cover 71 and the second armrest cover 72 are non-detachably connected in the form of riveting. In addition, in some alternative embodiments, the fastener 9 may not be provided, and the first armrest cover 71 and the second armrest cover 72 may be welded to each other.

In some alternative embodiments, the first armrest cover 71 is, for example, detachably connected to the second armrest cover 72, so that the first armrest cover 71 and the second armrest cover 72 can be replaced separately. There are many ways to detachably connect the first armrest cover 71 and the second armrest cover 72. For example, the above-mentioned plurality of fasteners 9 mounted in the plurality of mounting bases 723 can be replaced by bolts or screws. The first armrest cover 71 and the second armrest cover 72 are connected to each other by means of bolts or screws.

Referring to FIG. 5, in some embodiments, after the two pressing portions 721 of the second armrest cover 72 have been inserted into the first cavity 710 but before the fastener 9 is mounted, there may be a certain gap between the bottom wall 712 of the first cavity 710 and the mounting base 723. When the fastener 9 is mounted, the fastener 9 abuts the mounting base 723 against the bottom wall 712 of the first cavity 710, and the second armrest cover 72 is deformed under force, and the two pressing portions 721 of the second armrest cover 72 has a tendency to spread out, and thus compress the two first flanges 731 more tightly.

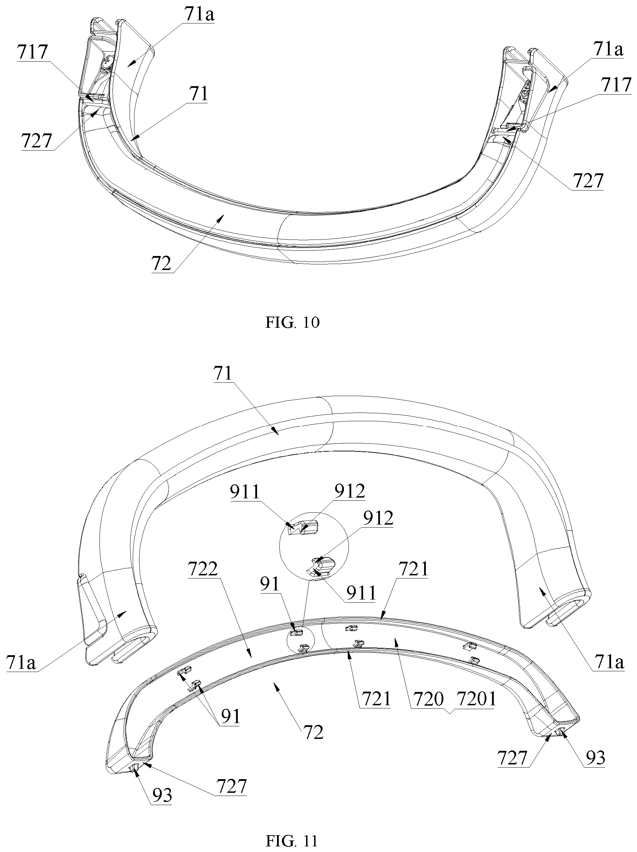

Referring to FIGS. 10 to 12, another exemplary mode for connection between the first armrest cover 71 and the second armrest cover 72 is shown. More specifically, the first armrest cover 71 is engaged with the second armrest cover 72. In some embodiments, an inner wall of the second armrest cover 72 (more specifically, see FIG. 11, a bottom wall 7201 of the second cavity 720) is provided with one or more elastic arms 91, and the bottom wall 712 of the first cavity 710 is provided with one or more engaging portions 92. The elastic arms 91 and the engaging portion 92 are adapted to be engaged with each other so that the first armrest cover 71 and the second armrest cover 72 are assembled together. Certainly, in some alternative embodiments, positions of the elastic arms 91 on the bottom wall 7201 of the second cavity 720 and positions of the engaging portion 92 on the bottom wall 712 of the first cavity 710 can be interchanged.

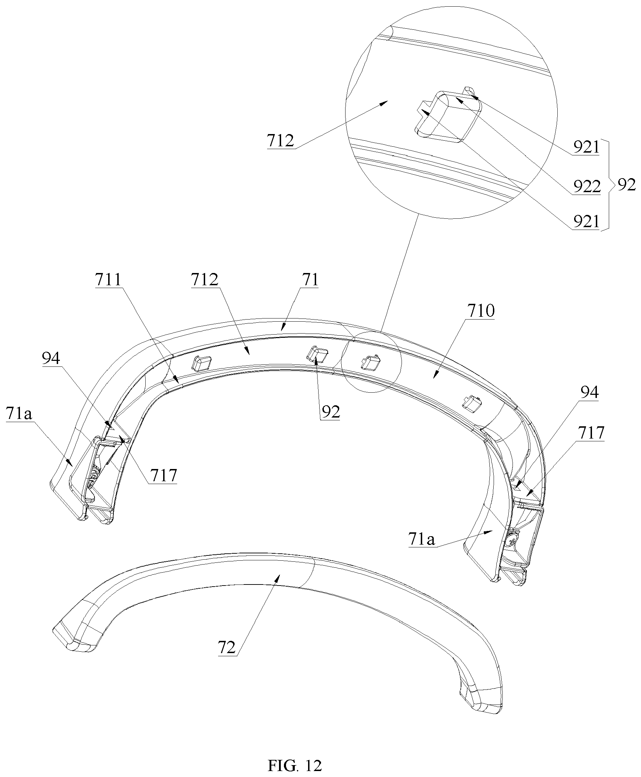

Referring to FIG. 12, exemplary configurations of the engaging portion 92 and the elastic arm 91 are shown. The engaging portion 92 includes a connecting body 921 and an engaging plate 922. An end of the connecting body 921 is connected to the bottom wall 712 of the first cavity 710, and the engaging plate 922 is positioned at another end of the connecting body 921. The elastic arm 91 includes an arm body 911 and a finger 912. An end of the arm body 911 is connected to the bottom wall 7201 of the second cavity 720, and the finger 912 is positioned at another end of the arm body 911. When mounting the second armrest cover 72 on the first armrest cover 71, each of the pressing portions 721 is inserted into the first cavity 710, and then the second armrest cover 72 is pressed so that the fingers 912 of the elastic arm 91 is automatically engaged with the engaging plate 922 in a hooked manner.

Referring to FIGS. 11 and 12, in some embodiments, through the abutment between the connecting body 921 and the finger 912, the lateral movement of the finger 912 is limited by the connecting body 921, preventing the second armrest cover 72 from shaking relative to the first armrest cover 71 in the left-right direction. As can be seen from FIG. 12, in the case of arranging the plurality of engaging portions 92, the connecting bodies 921 of a part of engaging portions 92 can be used to limit the leftward movements of the corresponding fingers 912, and the connecting bodies 921 of the other part of engaging portions 92 can be used to limit the rightward movements of the corresponding fingers 912. Certainly, in some alternative embodiments, the connecting bodies 921 of some engaging portions 92 can limit the leftward and rightward movements of the corresponding fingers 912 at the same time.

Referring to FIGS. 11 and 12, in some embodiments, each of the engaging portions 92 corresponds to a pair of elastic arms 91. The pair of elastic arms 91 are arranged to be opposed to each other in the longitudinal direction (also referred to as the front-rear direction). When the fingers 912 of the pair of elastic arms 91 are engaged with the engaging plate 922 of the corresponding engaging portion 92, the engaging plate 922 of the engaging portion 92 is clamped between the arm bodies 911 of the pair of elastic arms 91. In this way, it is beneficial to prevent the second armrest cover 72 from shaking in the front-rear direction relative to the first armrest cover 71.

Continuing to refer to FIGS. 10 to 12, in some embodiments, both ends of the first cavity 710 are respectively provided with a first end wall 717, and both ends of the second armrest cover 72 are respectively provided with a second end wall 727. Two second end walls 727 are positioned between two first end walls 717. One of the adjacent first end wall 717 and second end wall 727 is provided with a protrusion 93, and the other is provided with a hole 94. When the second armrest cover 72 is mounted onto the first armrest cover 71, the protrusion 93 is engaged into the hole 94, which further enhances the connection reliability between the first armrest cover 71 and the second armrest cover 72.

In some unshown embodiments, when the first armrest cover 71 and the second armrest cover 72 are engaged with each other by the elastic arms 91 and the engaging portions 92, at least a part of the outer surface of the second armrest cover 72 can be covered by a second covering member. The second covering member may have a second flange. The second flange and the first flange 731 are clamped between the first armrest cover 71 and the second armrest cover 72 at the same time.

In some embodiments, the first covering member 73 can be directly adhered to the first armrest cover 71. In some embodiments, a cushioning layer (not shown in the figure) may also be disposed between the first covering member 73 and the first armrest cover 71. The cushioning layer may be, for example, a foam layer or a silicone layer. The cushioning layer can provide better shock absorption effect for the armrest 7. The cushioning layer can be sewn or glued onto the first covering member 73, and then adhered to the first armrest cover 71. In some embodiments, the cushioning layer does not cover the two first flanges 731 of the first covering member 73.

The mounting process of the armrest 7 according to the embodiments of the present application is as follows.
1. An adhesive layer is arranged on the inner surface of the first covering member 73 in advance, the glue is applied on the first armrest cover 71, and then the first covering member 73 is tensioned on the first armrest cover 71, taking care to avoid wrinkles during the tensioning process. Then, the two side edges 73b of the first covering member 73 are turned toward the inside of the first cavity 710 to form the two first flanges 731.
2. After inserting the two pressing portions 721 of the second armrest cover 72 into the first cavity 710, the second armrest cover 72 is fixed to the first armrest cover 71, and the first flanges 731 are firmly clamped between the sidewall 711 of the first cavity 710 and the pressing portions 721, so that the first covering member 73 is maintained in a tensioned state. The second armrest cover 7 2 can be fixed to the first armrest cover 7 1 by using the above-mentioned fasteners 9, or engaged with the first armrest cover 71 by using the above-mentioned elastic arms 91 and the engaging portions 92.

## Claims

1. An armrest (7) for a child carrier, comprising a first armrest cover (71), a second armrest cover (72), and a first covering member (73),
wherein the first armrest cover (71) and the second armrest cover (72) are mounted to each other, **characterized in that** at least a part of an outer surface of the first armrest cover (71) is covered by the first covering member (73).

2. The armrest (7) according to claim 1, wherein the first covering member (73) comprises a first flange (731), and wherein the first flange (731) is clamped between the first armrest cover (71) and the second armrest cover (72).

3. The armrest (7) according to claim 1 or 2, wherein the first armrest cover (71) is provided with a first cavity (710) comprising two opposing sidewalls (711);
wherein the first covering member (73) comprises two first flanges (731) extending into the first cavity (710) respectively and corresponding to the two sidewalls (711) one by one;
wherein the second armrest cover (72) comprises two opposing pressing portions (721) inserted into the first cavity (710) and corresponding to the two first flanges (731) one by one; and
wherein a first portion (7311) of each of the two first flanges (731) is clamped between the corresponding sidewall (711) and the corresponding pressing portion (721).

4. The armrest (7) according to claim 3, wherein a second portion (7312) of each of the two first flanges (731) is clamped between a bottom wall (712) of the first cavity (710) and the corresponding pressing portion (721).

5. The armrest (7) according to claim 3 or 4, wherein the second armrest cover (72) comprises a base portion (722) positioned between the two pressing portions (721), wherein the two pressing portions (721) cooperate with the base portion (722) to define a second cavity (720), and an opening of the second cavity (720) faces a bottom wall (712) of the first cavity (710).

6. The armrest (7) according to any one of claims 1 to 5, wherein the first armrest cover (71) is engaged with the second armrest cover (72).

7. The armrest (7) according to claim 3, optionally in combination with any one of the claims 4 to 6, wherein at least one elastic arm (91) is disposed on one of a bottom wall (712) of the first cavity (710) and an inner wall of the second armrest cover (72), and at least one engaging portion (92) is disposed on the other of the bottom wall (712) of the first cavity (710) and the inner wall of the second armrest cover (72); and wherein the elastic arm (91) and the engaging portion (92) are adapted to be engaged with each other.

8. The armrest (7) according to claim 7, wherein the engaging portion (92) comprises a connecting body (921) and an engaging plate (922), an end of the connecting body (921) is connected to one of the bottom wall (712) of the first cavity (710) and the inner wall of the second armrest cover (72), and the engaging plate (922) is positioned on another end of the connecting body (921);
wherein the elastic arm (91) comprises an arm body (911) and a finger (912), an end of the arm body (911) is connected to the other of the bottom wall (712) of the first cavity (710) and the inner wall of the second armrest cover (72), and the finger (912) is positioned on another end of the arm body (911); and
wherein the engaging plate (922) and the finger (912) are adapted to be engaged with each other.

9. The armrest (7) according to claim 8, wherein a lateral movement of the finger (912) is limited by the connecting body (921); and/or
wherein each of the at least one engaging portion (92) corresponds to a pair of elastic arms (91), and the pair of elastic arms (91) clamps the corresponding engaging portion (92).

10. The armrest (7) according to claim 3, optionally in combination with any one of the claims 4 to 9, wherein both ends of the first cavity (710) are respectively provided with a first end wall (717), and both ends of the second armrest cover (72) are respectively provided with a second end wall (727); and
wherein one of the adjacent first end wall (717) and second end wall (727) is provided with a protrusion (93), and the other of the adjacent first end wall (717) and second end wall (727) is provided with a hole (94), the protrusion (93) being engaged into the hole (94).

11. The armrest (7) according to any one of the preceding claims, wherein the first covering member (73) is adhered to the first armrest cover (71); or
wherein a cushioning layer is disposed between the first covering member (73) and the first armrest cover (71).

12. The armrest (7) according to any one of the preceding claims, wherein the first armrest cover (71) is riveted or welded to the second armrest cover (72), or connected to the second armrest cover (72) by a pull rivet; or
wherein the first armrest cover (71) is detachably connected to the second armrest cover (72).

13. The armrest (7) according to any one of the preceding claims, wherein the first covering member (73) is leather, fabric or a decorative film.

14. A child carrier (100), comprising the armrest (7) according to any one of claims 1 to 13.

15. The child carrier (100) according to claim 14, further comprising side armrest supports (6) on both sides,
wherein two ends of the armrest (7) are detachably connected to the side armrest supports (6) on both sides.

## Patentansprüche

1. Armlehne (7) für einen Kinderträger, umfassend eine erste Armlehnenabdeckung (71), eine zweite Armlehnenabdeckung (72) und ein erstes Abdeckelement (73),
wobei die erste Armlehnenabdeckung (71) und die zweite Armlehnenabdeckung (72) aneinander montiert sind, **dadurch gekennzeichnet, dass** mindestens ein Teil einer Außenfläche der ersten Armlehnenabdeckung (71) durch das erste Abdeckelement (73) abgedeckt ist.

2. Armlehne (7) nach Anspruch 1, wobei das erste Abdeckelement (73) einen ersten Flansch (731) umfasst und wobei der erste Flansch (731) zwischen der ersten Armlehnenabdeckung (71) und der zweiten Armlehnenabdeckung (72) geklemmt ist.

3. Armlehne (7) nach Anspruch 1 oder 2, wobei die erste Armlehnenabdeckung (71) mit einem ersten Hohlraum (710) versehen ist, der zwei gegenüberliegende Seitenwände (711) umfasst;
wobei das erste Abdeckelement (73) zwei erste Flansche (731) umfasst, die sich jeweils in den ersten Hohlraum (710) erstrecken und den zwei Seitenwänden (711) eins zu eins entsprechen;
wobei die zweite Armlehnenabdeckung (72) zwei gegenüberliegende Druckabschnitte (721) umfasst, die in den ersten Hohlraum (710) eingefügt sind und den zwei ersten Flanschen (731) eins zu eins entsprechen; und
wobei ein erster Abschnitt (7311) von jedem der zwei ersten Flansche (731) zwischen der entsprechenden Seitenwand (711) und dem entsprechenden Druckabschnitt (721) geklemmt ist.

4. Armlehne (7) nach Anspruch 3, wobei ein zweiter Abschnitt (7312) von jedem der zwei ersten Flansche (731) zwischen einer Bodenwand (712) des ersten Hohlraums (710) und dem entsprechenden Druckabschnitt (721) geklemmt ist.

5. Armlehne (7) nach Anspruch 3 oder 4, wobei die zweite Armlehnenabdeckung (72) einen Basisabschnitt (722) umfasst, der zwischen den zwei Druckabschnitten (721) positioniert ist, wobei die zwei Druckabschnitte (721) mit dem Basisabschnitt (722) zusammenwirken, um einen zweiten Hohlraum (720) zu definieren, und eine Öffnung des zweiten Hohlraums (720) einer Bodenwand (712) des ersten Hohlraums (710) zugewandt ist.

6. Armlehne (7) nach einem der Ansprüche 1 bis 5, wobei die erste Armlehnenabdeckung (71) mit der zweiten Armlehnenabdeckung (72) in Eingriff steht.

7. Armlehne (7) nach Anspruch 3, optional in Kombination mit einem der Ansprüche 4 bis 6, wobei mindestens ein elastischer Arm (91) an einer von einer Bodenwand (712) des ersten Hohlraums (710) und einer Innenwand der zweiten Armlehnenabdeckung (72) angeordnet ist und mindestens ein Eingriffsabschnitt (92) an der anderen von der Bodenwand (712) des ersten Hohlraums (710) und der Innenwand der zweiten Armlehnenabdeckung (72) angeordnet ist; und wobei der elastische Arm (91) und der Eingriffsabschnitt (92) angepasst sind, um miteinander in Eingriff zu stehen.

8. Armlehne (7) nach Anspruch 7, wobei der Eingriffsabschnitt (92) einen Verbindungskörper (921) und eine Eingriffsplatte (922) umfasst, ein Ende des Verbindungskörpers (921) mit einer von der Bodenwand (712) des ersten Hohlraums (710) und der Innenwand der zweiten Armlehnenabdeckung (72) verbunden ist und die Eingriffsplatte (922) an einem anderen Ende des Verbindungskörpers (921) positioniert ist; wobei der elastische Arm (91) einen Armkörper (911) und einen Finger (912) umfasst, ein Ende des Armkörpers (911) mit der anderen von der Bodenwand (712) des ersten Hohlraums (710) und der Innenwand der zweiten Armlehnenabdeckung (72) verbunden ist und der Finger (912) an einem anderen Ende des Armkörpers (911) positioniert ist; und wobei die Eingriffsplatte (922) und der Finger (912) angepasst sind, um miteinander in Eingriff zu stehen.

9. Armlehne (7) nach Anspruch 8, wobei eine seitliche Bewegung des Fingers (912) durch den Verbindungskörper (921) begrenzt ist; und/oder
wobei jeder von dem mindestens einen Eingriffsabschnitt (92) einem Paar elastischer Arme (91) entspricht und das Paar elastischer Arme (91) den entsprechenden Eingriffsabschnitt (92) klemmt.

10. Armlehne (7) nach Anspruch 3, optional in Kombination mit einem der Ansprüche 4 bis 9, wobei beide Enden des ersten Hohlraums (710) jeweils mit einer ersten Endwand (717) versehen sind und beide Enden der zweiten Armlehnenabdeckung (72) jeweils mit einer zweiten Endwand (727) versehen sind; und
wobei eine von der benachbarten ersten Endwand (717) und zweiten Endwand (727) mit einem Vorsprung (93) versehen ist und die andere von der benachbarten ersten Endwand (717) und zweiten Endwand (727) mit einem Loch (94) versehen ist, wobei der Vorsprung (93) in das Loch (94) eingreift.

11. Armlehne (7) nach einem der vorhergehenden Ansprüche, wobei das erste Abdeckelement (73) an der ersten Armlehnenabdeckung (71) haftet; oder
wobei eine Polsterschicht zwischen dem ersten Abdeckelement (73) und der ersten Armlehnenabdeckung (71) angeordnet ist.

12. Armlehne (7) nach einem der vorhergehenden Ansprüche, wobei die erste Armlehnenabdeckung (71) mit der zweiten Armlehnenabdeckung (72) vernietet oder verschweißt oder mit der zweiten Armlehnenabdeckung (72) durch einen Zugniet verbunden ist; oder
wobei die erste Armlehnenabdeckung (71) lösbar mit der zweiten Armlehnenabdeckung (72) verbunden ist.

13. Armlehne (7) nach einem der vorhergehenden Ansprüche, wobei das erste Abdeckelement (73) Leder, Gewebe oder eine dekorative Folie ist.

14. Kinderträger (100), umfassend die Armlehne (7) nach einem der Ansprüche 1 bis 13.

15. Kinderträger (100) nach Anspruch 14, ferner umfassend seitliche Armlehnenstützen (6) auf beiden Seiten,
wobei zwei Enden der Armlehne (7) lösbar mit den seitlichen Armlehnenstützen (6) auf beiden Seiten verbunden sind.

## Revendications

1. Accoudoir (7) pour un porte-enfant, comprenant un premier couvercle d'accoudoir (71), un second couvercle d'accoudoir (72) et un premier élément de recouvrement (73),
dans lequel le premier couvercle d'accoudoir (71) et le second couvercle d'accoudoir (72) sont montés l'un sur l'autre, **caractérisé en ce qu'**au moins une partie d'une surface extérieure du premier couvercle d'accoudoir (71) est recouverte par le premier élément de recouvrement (73).

2. Accoudoir (7) selon la revendication 1, dans lequel le premier élément de recouvrement (73) comprend une première bride (731), et dans lequel la première bride (731) est serrée entre le premier couvercle d'accoudoir (71) et le second couvercle d'accoudoir (72).

3. Accoudoir (7) selon la revendication 1 ou 2, dans lequel le premier couvercle d'accoudoir (71) est pourvu d'une première cavité (710) comprenant deux parois latérales opposées (711) ;
dans lequel le premier élément de recouvrement (73) comprend deux premières brides (731) s'étendant dans la première cavité (710) respectivement et correspondant aux deux parois latérales (711) une par une ;
dans lequel le second couvercle d'accoudoir (72) comprend deux parties de pression opposées (721) insérées dans la première cavité (710) et correspondant aux deux premières brides (731) une par une ; et
dans lequel une première partie (7311) de chacune des deux premières brides (731) est serrée entre la paroi latérale correspondante (711) et la partie de pression correspondante (721).

4. Accoudoir (7) selon la revendication 3, dans lequel une seconde partie (7312) de chacune des deux premières brides (731) est serrée entre une paroi inférieure (712) de la première cavité (710) et la partie de pression correspondante (721).

5. Accoudoir (7) selon la revendication 3 ou 4, dans lequel le second couvercle d'accoudoir (72) comprend une partie de base (722) positionnée entre les deux parties de pression (721), dans lequel les deux parties de pression (721) coopèrent avec la partie de base (722) pour définir une seconde cavité (720), et une ouverture de la seconde cavité (720) fait face à une paroi inférieure (712) de la première cavité (710).

6. Accoudoir (7) selon l'une quelconque des revendications 1 à 5, dans lequel le premier couvercle d'accoudoir (71) est en prise avec le second couvercle d'accoudoir (72).

7. Accoudoir (7) selon la revendication 3, éventuellement en combinaison avec l'une quelconque des revendications 4 à 6, dans lequel au moins un bras élastique (91) est disposé sur l'une d'une paroi inférieure (712) de la première cavité (710) et d'une paroi interne du second couvercle d'accoudoir (72), et au moins une partie de mise en prise (92) est disposée sur l'autre de la paroi inférieure (712) de la première cavité (710) et de la paroi interne du second couvercle d'accoudoir (72) ; et dans lequel le bras élastique (91) et la partie de mise en prise (92) sont adaptés pour être en prise l'un avec l'autre.

8. Accoudoir (7) selon la revendication 7, dans lequel la partie de mise en prise (92) comprend un corps de liaison (921) et une plaque de mise en prise (922), une extrémité du corps de liaison (921) est reliée à l'une de la paroi inférieure (712) de la première cavité (710) et de la paroi interne du second couvercle d'accoudoir (72), et la plaque de mise en prise (922) est positionnée sur une autre extrémité du corps de liaison (921) ;
dans lequel le bras élastique (91) comprend un corps de bras (911) et un doigt (912), une extrémité du corps de bras (911) est reliée à l'autre de la paroi inférieure (712) de la première cavité (710) et de la paroi interne du second couvercle d'accoudoir (72), et le doigt (912) est positionné sur une autre extrémité du corps de bras (911) ; et
dans lequel la plaque de mise en prise (922) et le doigt (912) sont adaptés pour être en prise l'un avec l'autre.

9. Accoudoir (7) selon la revendication 8, dans lequel un mouvement latéral du doigt (912) est limité par le corps de liaison (921) ; et/ou
dans lequel chacune de l'au moins une partie de mise en prise (92) correspond à une paire de bras élastiques (91), et la paire de bras élastiques (91) serre la partie de mise en prise correspondante (92).

10. Accoudoir (7) selon la revendication 3, éventuellement en combinaison avec l'une quelconque des revendications 4 à 9, dans lequel les deux extrémités de la première cavité (710) sont respectivement pourvues d'une première paroi d'extrémité (717), et les deux extrémités du second couvercle d'accoudoir (72) sont respectivement pourvues d'une seconde paroi d'extrémité (727) ; et
dans lequel l'une de la première paroi d'extrémité (717) et de la seconde paroi d'extrémité (727) adjacentes est pourvue d'une saillie (93), et l'autre de la première paroi d'extrémité (717) et de la seconde paroi d'extrémité (727) adjacentes est pourvue d'un trou (94), la saillie (93) étant en prise dans le trou (94).

11. Accoudoir (7) selon l'une quelconque des revendications précédentes, dans lequel le premier élément de recouvrement (73) est collé au premier couvercle d'accoudoir (71) ; ou dans lequel une couche d'amortissement est disposée entre le premier élément de recouvrement (73) et le premier couvercle d'accoudoir (71).

12. Accoudoir (7) selon l'une quelconque des revendications précédentes, dans lequel le premier couvercle d'accoudoir (71) est riveté ou soudé au second couvercle d'accoudoir (72), ou relié au second couvercle d'accoudoir (72) par un rivet à tirer ; ou
dans lequel le premier couvercle d'accoudoir (71) est relié de manière amovible au second couvercle d'accoudoir (72).

13. Accoudoir (7) selon l'une quelconque des revendications précédentes, dans lequel le premier élément de recouvrement (73) est du cuir, du tissu ou un film décoratif.

14. Porte-enfant (100), comprenant l'accoudoir (7) selon l'une quelconque des revendications 1 à 13.

15. Porte-enfant (100) selon la revendication 14, comprenant en outre des supports d'accoudoir latéraux (6) des deux côtés,
dans lequel deux extrémités de l'accoudoir (7) sont reliées de manière amovible aux supports d'accoudoir latéraux (6) des deux côtés.
